Europäisches Patentamt

European Patent Office

Office européen des brevets

(19)

(11) Numéro de publication: **0 055 180
B1**

(12) **FASCICULE DE BREVET EUROPEEN**

(45) Date de publication du fascicule du brevet:
27.12.85

(51) Int. Cl.⁴: **B 01 J 19/02**

(21) Numéro de dépôt: **81402028.5**

(22) Date de dépôt: **18.12.81**

(54) **Procédé de protection principalement contre la cokéfaction des surfaces en alliage réfractaire en contact avec les réactifs dans des fours de pyrolyse et fours obtenus par ce procédé.**

(30) Priorité: **19.12.80 FR 8027118**

(43) Date de publication de la demande:
**30.06.82 Bulletin 82/26**

(45) Mention de la délivrance du brevet:
**27.12.85 Bulletin 85/52**

(84) Etats contractants désignés:
**AT BE CH DE GB IT LI LU NL SE**

(56) Documents cités:
**DE - A - 2 009 085
DE - A - 2 514 565
DE - C - 709 215
FR - A - 2 165 263
FR - A - 2 184 003
FR - A - 2 290 508
GB - A - 1 149 163
US - A - 2 056 914**

(73) Titulaire: **FONDERIES ET ACIERIES DU MANOIR, Tour Mattei 207, rue de Bercy, F-75587 Paris Cedex 12 (FR)**
Titulaire: **ELF-FRANCE, 137, rue de l'Université, F-75007 Paris (FR)**

(72) Inventeur: **Hugo, Michel, Rue du Maréchal de Lattre de Tassigny, F-54670 Custines (FR)**
Inventeur: **Pons, Fernand, 35, Bd. de la Seine, F-27460 Le Manoir s/Seine (FR)**
Inventeur: **Thuillier, Jacques, 11, rue Jean Prieur, F-27340 Pont de l'Arche (FR)**
Inventeur: **Monnier, Gilbert Louis, INSA - Bât. 401 Sce. Phys-Chim. Indust., Av. A. Einstein 69621 Villeurbanne (FR)**
Inventeur: **Cambes, Michel Roger, F-38200 Villette de Vienne (FR)**
Inventeur: **Papapietro, Michel, 10, rue Malesherbes, F-69000 Lyon (FR)**

(74) Mandataire: **Hirsch, Marc-Roger, 34 rue de Bassano, F-75008 Paris (FR)**

## Description

La présente invention a pour objet un procédé de protection principalement contre la cokéfaction des surfaces en alliage réfractaire en contact avec les réactifs dans des fours, notamment tubulaires, travaillant à température élevée pour réaliser, par exemple, le craquage d'hydrocarbures ou autres matières organiques par pyrolyse, consistant à utiliser comme alliage réfractaire de base un alliage du type ferchrome-nickel. Elle se rapporte également aux fours obtenus par ce procédé.

On sait qu'au cours des réactions de pyrolyse des produits organiques, il se produit généralement la formation de carbone de décomposition que se rassemble en granules entraînés par le débit de gaz, mais que peuvent cependant s'agglomérer sur la paroi des tubes de réaction dont la température est plus forte que l'effluent, car les réactions sont généralement endothermiques.

Dans de multiples occasions, l'importance du dépôt de coke ainsi formé limite progressivement le transfert thermique, conduit à une surchauffe de la paroi interne du tube et favorise de ce fait la cémentation du métal ou de l'alliage réfractaire constituant le tube.

Dans les cas extrêmes, il peut se produire une obturation totale que arrête bien entendu le procédé. On élimine alors le coke formé par une combustion in situ en remplaçant les gaz du procédé par un mélange air-vapeur passant dans les tubes à une température de 650 à 750°C environ. Mais, ceci conduit à un cyclage thermique du métal des tubes et donc à une fatigue thermique et à une carburation plus profonde.

Pour résoudre ce problème, il a déjà été proposé de réaliser un revêtement de la paroi interne du tube de réaction par des métaux comme l'aluminium. Par exemple, il est décrit dans le brevet français FR-A-2 184 003 un procédé de revêtement au trempé dans le métal liquide comprenant de préférence également du mischmétal ou du cérium, dans lequel on traite, après dépôt, le tube à une température comprise entre 980 et 1205°C environ pour réaliser une oxydation.

D'autres procédés de revêtement de la paroi interne du tube de réaction consistent à vaporiser en phase gazeuse et à réaliser une diffusion, ou bien une pulvérisation simple, ou encore à réaliser la fusion à l'intérieur du tube d'aluminium introduit dans la lumière du tube en alliage réfractaire en fin de centrifugation.

On citera en particulier EP-A-11 874 qui concerne un procédé de production d'éthylène par hydropyrolyse d'un mélange d'hydrocarbures, d'hydrogène, de CO, de $CO_2$ et de vapeur d'eau, mis au contact d'une zone réactionnelle comportant des parois en acier chrome-nickel dont la surface au moins contient de l'aluminium et/ou du cuivre.

DE-C-709 205 décrit des installations de craquage d'hydrocarbures constituées au moins en partie d'alliages d'acier contenant moins de 15% d'aluminium, pour éviter la formation de coke.

Cependant, les procédés connus selon le FR-A-2 184 003 empêchent seulement la carburation du métal ou de l'alliage réfractaire du tube constituant le four de pyrolyse pendant un temps assez court de l'ordre de plusieurs centaines d'heures car il se produit en effet:

1.  des effets de diffusion dans le métal ou l'alliage de base qui le fragilisent et conduisent à un écaillage qui fait perdre ses propriétés à ce type de réalisation;
2.  l'oxydation amenée par les gaz du procédé de pyrolyse entraîne rapidement la disparition d'aluminium et également la perte de ces mêmes propriétés sans compter les difficultés de préparation de la base permettant l'accrochage de la couche de revêtement interne.

Le procédé de la présente invention a pour but d'éliminer les inconvénients précités en fournissant une solution qui permette de protéger efficacement les fours de pyrolyse contre la cokéfaction tout en leur assurant une protection suffisante contre la carburation ce qui permet d'éviter la réalisation du cyclage thermique précité.

Cette solution consiste selon la présente invention en éléments du four en contact avec les réactifs en deux couches d'alliage réfractaire respectivement interne et externe, la couche d'alliage réfractaire interne comprenant un élément formateur d'oxyde et la couche d'alliage réfractaire externe étant dépourvue de cet élément formateur d'oxyde, lesdites couches étant jointes sans séparation par tout procédé approprié, et en ce que ledit élément formateur d'oxydes est employé en une quantité de l'ordre de 6% (en poids par rapport à l'alliage réfractaire) pour former une couche catalytique homogène et continue, le métal précité formateur d'oxyde étant choisi dans le groupe comprenant l'aluminium, le titane, le zirconium, le thorium ou leurs combinaisons.

Selon une forme d'exécution dudit procédé, l'élément précité formateur d'oxyde est l'aluminium.

Selon une autre forme d'exécution dudit procédé, les couches interne et externe sont réalisées par le procédé de centrifugation.

Selon encore une autre forme d'exécution dudit procédé, l'épaisseur minimale de la couche interne est de 5 à 6 mm.

L'invention a également pour objet les fours de pyrolyse dont les surfaces en contact avec les réactifs comprennent un alliage réfractaire contenant au moins un élément formateur d'oxyde préparé par le procédé.

Avantageusement, l'élément formateur d'oxyde précité est un métal choisi parmi les métaux de

2

groupes III et IV de la Classification Périodique des éléments, ou leurs combinaisons entre eux ou avec d'autres éléments formateurs d'oxydes catalyseurs. Comme métal préféré, on peut utiliser l'aluminium, et le cas échéant l'yttrium, une ou plusieurs Terres Rares, le titane, le zirconium, le thorium, ou leurs combinaisons entre eux ou avec d'autres éléments formateurs d'oxydes catalyseurs. L'aluminium est le métal employé de préférence.

Selon une caractéristique avantageuse de ce procédé, lesdites couches interne et externe sont jointes sans séparation de préférence par un procédé de centrifugation. L'épaisseur minimale de la couche interne est de préférence de 5 à 6 mm pour des raisons technologiques.

Le procédé de la présente invention procure les avantages techniques suivants:

a) une continuité des opérations de pyrolyse avec suppression du décokage, ce qui permet de régulariser le débit et le rendement;

b) une stabilité de la température du tube avec suppression du cyclage et de la fatigue thermique;

c) l'élimination des surchauffes de sorte que la carburation du tube constituant le four de pyrolyse est nulle; et

d) une économie de consommation d'énergie.

D'autres buts, caractéristiques et avantages de la présente invention apparaîtront plus clairement à l'aide de la description suivante faite en référence à des essais de résistance au cokage ainsi que de résistance de la couche catalysatrice entre des échantillons selon l'art antérieur et des échantillons selon le présent procédé, donnés seulement à titre d'information et ne pouvant donc en aucune façon limiter la portée de la présente invention.

Exemple 1

Pour réaliser des essais de résistance au cokage, on a préparé:

a) un échantillon brut en alliage réfractaire HK40 comprenant: 0,40% de carbone, 25% de chrome et 20% de nickel, solde fer et autres éléments tels que manganèse et silicium et impuretés dans les teneurs habituelles;

b) un échantillon d'alliage HP4 contenant 0,40% de carbone, 25% de chrome, 35% de nickel, le solde fer et éléments habituels, additionnés de 4% d'aluminium; et

c) un échantillon d'alliage HP6 contenant 0,40% de carbone, 25% de chrome, 35% de nickel, le solde fer et éléments habituels, additionnés de 6% d'aluminium.

Tableau I

| Echantillon | Durée d'exposition | Teneur en vapeur d'eau | Résultats |
|---|---|---|---|
| HK40 | 16H 101H | 30% | Echantillon recouvert d'un dépôt noir de coke |
| | 16H | 50% | idem |
| HP4 | 16H 101H | 30% | Echantillon recouvert d'un dépôt noir de coke sur une couche non |
| | 16H | 50% | homogène de $Al_2O_3$ |
| HP6 | 16H 101H | 30% | Pas de dépôt mais recouvert d'une couche homogène de $Al_2O_3$ |
| | 16H | 50% | |

Ces échantillons ont été disposés dans un mélange gazeux d'hydrogène, méthane et vapeur d'eau à 30 puis à 50% de vapeur d'eau à une température égale à 1050° C.

Les résultats de ces essais de cokage sont répertoriés dans le tableau I ci-dessus.

Cet exemple 1 montre qu'en opérant sur l'alliage HP4, des résultats bien inférieurs à ceux obtenus pour HP6 ont été constatés. Dans le cas de HP4, se forme un dépôt noir de coke et dans l'autre aucun dépôt de coke n'est constaté.

A partir de ce tableau; il est tout à fait clair que l'échantillon en alliage HP6 conforme à la présente invention et comportant de l'ordre de 6% d'éléments formateurs d'oxyde, en l'occurrence d'aluminium, permet d'une manière inattendue d'éviter la cokéfaction.

Exemple 2

Pour réaliser des essais de résistance de la couche catalysatrice, il a été préparé:

a)  des échantillons en alliage réfractaire HP40 contenant 0,40% de carbone, 25% de chrome et 20% de nickel, aluminisé par le procédé de transport en phase gazeuse;

b)  des échantillons en alliage HPW déjà très résistant à la carburation, contenant 0,40% de carbone, 25% de chrome, 35% de nickel, 1% de niobium et 1% de tungstène, également aluminisé par le procédé de transport en phase gazeuse; et

Tableau II

| Température | Nature de l'échantillon | Résistance de la couche catalysatrice |
|---|---|---|
| 1050° C | HK40 aluminisé HPW aluminisé | Rupture et décollement de la couche aluminisée en moins de 500 H |
| | HP6 | Pas de dégradation notable |
| 1100° C | HK40 aluminisé HPW aluminisé | Rupture et décollement de la couche aluminisée en moins de 100 H |
| | HP6 | Pas de dégradation notable |

c)  des échantillons en alliage HP6 contenant 0,40% de carbone, 25% de chrome, 35% de nickel et 6% d'aluminium comme élément formateur d'oxyde.

Le solde de chaque alliage HK40, HPW et HP6 précité est constitué par du fer et d'autres éléments habituels tels que manganèse et silicium et des impuretés dans les teneurs habituelles.

Tours ces échantillons étaient exposés au mélange carburant hydrogène plus méthane plus vapeur d'eau à 1050° C et également à 1100° C.

Les résultats obtenus sont répertoriés au tableau II ci-dessus:

Ces résultats démontrent bien la pérennité de l'action protectrice du procédé selon la présente invention.

Les résultats répertoriés aux tableaux I et II démontrent que, contrairement aux couches formées par dépôt, qui une fois leur épaisseur consommée ne peuvent plus agir, le procédé selon la présente invention qui comprend l'emploi au moins sur une partie des surfaces en alliage réfractaire en contact avec les réactifs du four de pyrolyse d'un alliage enrichi en éléments formateurs d'oxydes, permet, si la couche réactive superficielle est éliminée pour une raison quelconque, de réformer cette couche sur l'alliage lorsque celui-ci est encore présent dans l'atmosphère oxydante propre au procédé de pyrolyse.

On a indiqué précédemment que l'on peut réaliser les éléments du four de pyrolyse en contact avec les réactifs avec une couche interne comprenant l'alliage réfractaire enrichi en élément formateur d'oxyde selon la présente invention, et une couche externe dépourvue de cet élément. La présence de la couche externe en alliage réfractaire dépourvu d'élément formateur d'oxyde est souvent préférable car on a observé que les caractéristiques de résistance au fluage des alliages réfractaires enrichis en élément formateur d'oxyde selon la présente invention étaient sensiblement inférieures à celles des alliages réfractaires non enrichis qui présentent eux une haute résistance au fluage. La jonction des couches interne et externe est facilement réalisée sans séparation par une couche mince de diffusion progressive des deux alliages de préférence par un procédé de centrifugation.

On doit encore signaler que bien que le mécanisme permettant d'éviter la cokéfaction ne soit pas encore bien maîtrisé, les expériences réalisées par les demanderesses permettent de penser que les oxydes obtenus à partir des éléments formateurs d'oxydes selon la présente invention facilitent l'oxydation du coke par catalyse ce qui permet d'éviter le dépôt du coke, de diminuer son adhérence, ou de faciliter le craquage des molécules lourdes initiatrices de coke, dans les fours de pyrolyse.

Il est important de noter que des essais conformes à ceux indiqués aux exemples 1 et 2 ont été réalisés avec d'autres éléments formateurs d'oxydes selon la présente invention et en particulier avec le titane, le zirconium et le thorium en adjonction simple ou en mélanges divers et il a été prouvé que ces éléments formateurs d'oxydes produisaient au moins les mêmes résultats que l'aluminium, c'est-à-dire une protection contre la cokéfaction pendant une durée au moins égale à celle réalisée avec l'emploi de l'aluminium.

**Revendications**

1. Procédé de protection principalement contre la cokéfaction des surfaces en alliage réfractaire en contact avec les réactifs dans des fours, notamment tubulaires, travaillant à température élevée pour réaliser, par exemple, le craquage d'hydrocarbures ou autres matières organiques par pyrolyse, consistant à utiliser comme alliage réfractaire de base un alliage du type fer-chrome-nickel, ce procédé étant caractérisé en ce qu'on réalise les éléments du four en contact avec les réactifs en deux couches d'alliage réfractaire respectivement interne et externe, la couche d'alliage réfractaire interne comprenant un élément formateur d'oxyde et la couche d'alliage réfractaire externe étant dépourvue de cet élément formateur d'oxyde, lesdites couches étant jointes sans séparation par tout procédé approprié, et en ce que ledit élément formateur d'oxydes est employé en une quantité de l'ordre de 6% (en poids par rapport à l'alliage réfractaire) pour former une couche catalytique homogène et continue, le métal précité formateur d'oxyde étant choisi dans le groupe comprenant l'aluminium, le titane, le zirconium, le thorium ou leurs combinaisons.

2. Procédé selon la revendication 1, caractérisé en ce que l'élément précité formateur d'oxyde est l'aluminium.

3. Procédé selon la revendication 1, caractérisé en ce que les couches interne et externe sont réalisées par le procédé de centrifugation.

4. Procédé selon la revendication 1 ou 2, caractérisé en ce que l'épaisseur minimale de la couche interne est de 5 à 6 mm.

5. Fours de pyrolyse, caractérisés en ce que les surfaces en contact avec les réactifs comprennent un alliage réfractaire contenant au moins un élément formateur d'oxyde préparé par le procédé selon l'une quelconque des revendications 1 à 4 précitées.

**Patentansprüche**

1. Verfahren zum Schutz, insbesondere gegen Verkokung, der Oberflächen von feuerfesten Legierungen, die mit Reagenzien in Öfen in Berührung stehen, insbesondere in Rohröfen, die bei hoher Temperatur, beispielsweise zwecks pyrolytischer Spaltung von Kohlenwasserstoffen oder anderen organischen Stoffen, betrieben werden, wobei als feuerfeste Legierung eine Eisen-Chrom-Nickellegierung verwendet wird, dadurch gekennzeichnet, daß die mit den Reagenzien in Berührung stehenden Ofenteile derart erstellt werden, daß sie eine innere und eine äußere feuerfeste Legierungsschicht aufweisen, wobei die innere feuerfeste Legierungsschicht ein oxydbildendes Element enthält, während dieses oxydbildende Element in der äußeren feuerfesten Legierungsschicht nicht vorliegt und die beiden Schichten trennungslos in geeigneter Weise miteinander verbunden werden, und daß das oxydbildende Element in einer Menge von etwa 6% eingesetzt wird (Gewichts-% in bezug auf die feuerfeste Legierung), um eine homogene, ununterbrochene katalytische Schicht zu bilden, wobei das oxydbildende Metall zu der aus Aluminium, Titan, Zirkonium, Thorium und deren Kombinationen gebildeten Gruppe gehört.

2. Verfahren nach Anspruch 1, dadurch gekennzeichnet, daß das oxydbildende Element Aluminium ist.

3. Verfahren nach Anspruch 1, dadurch gekennzeichnet, daß die innere Schicht und die äußere Schicht durch das Zentrifugalverfahren hergestellt werden.

4. Verfahren nach Anspruch 1 oder 2, dadurch gekennzeichnet, daß die innere Schicht eine Minimalstärke von 5 bis 6 mm besitzt.

5. Pyrolyseöfen, dadurch gekennzeichnet, daß die mit den Reagenzien in Berührung stehenden Oberflächen eine feuerfeste Legierung mit wenigstens einem oxydbildenden Element aufweisen, hergestellt vermittels des Verfahrens nach einem der Ansprüche 1 bis 4.

**Claims**

1. Method of protecting, especially against coking, refractory alloy surfaces in contact with the reagents within ovens, especially tubular ovens operating at an elevated temperature, e. g. for pyrolytically cracking hydrocarbons or other organic substances, wherein the refractory alloy used is of the iron-chrome-nickel type, characterized in that the components of the oven which are in contact with the reagents are made of an inner refractory alloy layer and an outer refractory alloy layer, said inner refractory alloy layer containing an oxide forming element, while said outer refractory alloy layer does not contain said oxide forming element, said layers being jointed without separation, by any convenient method, and in that said oxide forming element is used in an amount of about 6% (by weight with reference to the refractory alloy) so as to form a homogeneous continuous catalytic layer, the said oxide forming metal being selected from the group comprising aluminium, titanium, zirconium, thorium or combinations thereof.

2. Method according to claim 1, characterized in that said oxide forming element is aluminium.

3. Method according to claim 1, characterized in that said inner layer and outer layer are obtained by the centrifugal process.

4. Method according to any one of claims 1 and 2, characterized in that the minimum thickness of said inner layer is comprised between 5 and 6 mm.

5. Pyrolysis ovens, characterized in the surfaces in contact with the reagents comprise a refractory alloy containing at least one oxide forming element, prepared by the process according to any one of claims 1 to 4.